# FASCICULE DE BREVET EUROPEEN

(11) **EP 3 615 383 B1**
(45) Date de publication et mention de la délivrance du brevet: **20.01.2021**
(21) Numéro de dépôt: 18725279.6
(22) Date de dépôt: 24.04.2018
(51) Int. Cl.: B60R 9/045, B60R 9/058

(54) **DISPOSITIF DE RÉHAUSSE DE BARRES DE TOIT**
VORRICHTUNG ZUM HEBEN VON DACHTRÄGERN
ELEVATION DEVICE FOR ROOF RACKS

(30) Priorité: 25.04.2017 FR 1753591
(43) Date de publication de la demande: 04.03.2020
(73) Titulaire: NOVARES France, 92140 Clamart (FR)
(72) Inventeur: CHENAUD, David, 01100 Bellignat (FR); HUGUET, Guillaume, 01250 Nivigne Et Suran (FR)
(74) Mandataire: Delorme, Nicolas
(86) Numéro de dépôt international: PCT/FR2018/051014
(87) Numéro de publication internationale: WO 2018/197796

(56) Documents cités:
- US-A- 4 364 500
- US-A1- 2008 252 100
- US-A1- 2008 257 924
- US-A1- 2009 321 485
- US-A1- 2016 243 994

## Description

La présente invention concerne un ensemble de barres de toit destiné à être positionné sur le toit d'un véhicule.

Il est connu d'utiliser des barres de toit pour supporter, par exemple, un coffre de toit ou un porte-vélos sur le toit d'un véhicule.

Le plus souvent, les barres de toit transversales sont accrochées sur des barres longitudinales fixées au véhicule. La fixation des barres de toit transversales aux barres longitudinales est souvent réalisée au moyen d'un ensemble vis-écrou traversant la barre de toit transversale et la barre longitudinale. De même, il est connu d'utiliser des mâchoires réglables positionnées à chaque extrémité de la barre de toit transversale et configurées pour serrer chacune une barre longitudinale. Pour conserver l'aérodynamisme du véhicule il est nécéssaire qu'en position longitudinale les barres de toit soient proches du toit. Inversement, il est nécessaire qu'en position transversale les barres de toit soient plus éloignées du toit (selon une direction normale au plan du toit) pour permettre le passage d'un système d'accroche d'un accessoire.

Une solution connue du document US2016243994 consiste à utiliser des barres de toit pivotantes, sur un rail, entre une position longitudinale et une position transversale. Lors du passage en position transversale, les pieds de la barre de toit se plient pour la rehausser. Cette solution impose la présence d'un rail sur le toit du véhicule, ce qui alourdit la barre de toit et, à terme, augmente la consommation énergétique du véhicule sur lequel la barre de toit est installée. De plus, cette solution utilise une charnière qui peut s'affaisser sous une charge importante. D'autres solutions connues sont décrites dans les documents US 2009/321485 et US 2008/252100, ce dernier document exposant les caractéritiques du préambule de la revendication 1.

En conséquence, la présente invention a pour objectif de fournir un ensemble de barre de toit qui puisse pivoter tout en permettant de faire varier la distance entre le toit et la barre de toit, en utilisant un mécanisme simple, léger et robuste.

L'invention concerne un ensemble de barre de toit selon la revendication 1.

Les moyens d'entretoisage permettent de faire varier la distance entre la barre et le toit du véhicule. Ainsi, en position longitudinale la barre est proche du toit, ce qui favorise l'aérodynamisme du véhicule. En position transversale, les moyens d'entretoisage permettent de rehausser la barre pour permettre l'accroche d'un accessoire comme par exemple un coffre de toit ou un porte skis.

Ainsi, l'invention fournit un ensemble de barre de toit qui peut pivoter tout en permettant de faire varier la distance entre le toit et la barre de toit, en utilisant un mécanisme simple, léger et robuste.

Selon une disposition particulière, l'entretoise peut présenter un filet hélicoïdal adapté pour coopérer avec un filet hélicoïdal complémentaire du pied pour permettre d'ajuster la distance entre la platine de fixation du pied et la barre en position transversale.

Le premier perçage débouchant peut être perpendiculaire au second perçage débouchant.

Le pied peut présenter un doigt de détrompage adapté pour être engagé dans une empreinte de la barre lorsque la barre est en position longitudinale.

Le doigt de détrompage permet de garantir le positionnement correct de la barre en position longitudinale.

La barre peut être un profilé de section transversale rectangulaire.

La section transversale rectangulaire peut permettre d'augmenter la distance d'un accessoire fixé sur la barre, par rapport au toit, de la valeur de l'épaisseur de l'entretoise plus la valeur de la longueur de la section rectangulaire de la barre. En effet, la section rectangulaire peut par exemple permettre d'utiliser le côté de faible épaisseur lorsque la barre est en position longitudinale et d'utiliser le coté d'épaisseur plus importante lorsque la barre est en position transversale, pour augmenter la distance entre le toit du véhicule et l'accessoire fixé à la barre.

La barre présente deux extrémités, un insert est positionné à chaque extrémité.

L'insert peut présenter une forme parallélépipédique.

L'insert peut comprendre un capot pivotant adapté pour recouvrir au moins partiellement l'insert.

L'insert peut présenter une saignée adaptée pour recevoir un col de cygne du capot permettant au capot de pivoter par rapport à l'insert.

Le capot peut présenter deux faces.

D'autres caractéristiques et avantages de la présente invention ressortiront clairement de la description détaillée ci-après de trois modes de réalisation de l'invention donnés à titre d'exemples non limitatifs, en référence aux dessins annexés, dans lesquels :
- La figure 1 est une vue en perspective éclatée d'un ensemble de barres de toit selon l'invention,

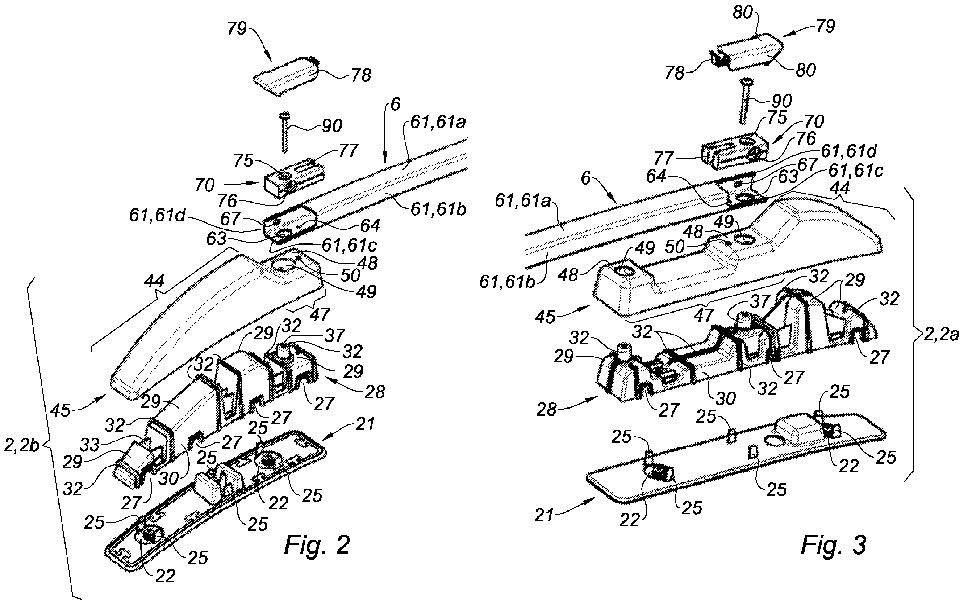

- La figure 2 est une vue en perspective éclatée partielle d'une barre de toit et d'un pied,
- La figure 3 est une vue en perspective éclatée partielle d'une barre de toit et d'un pied,

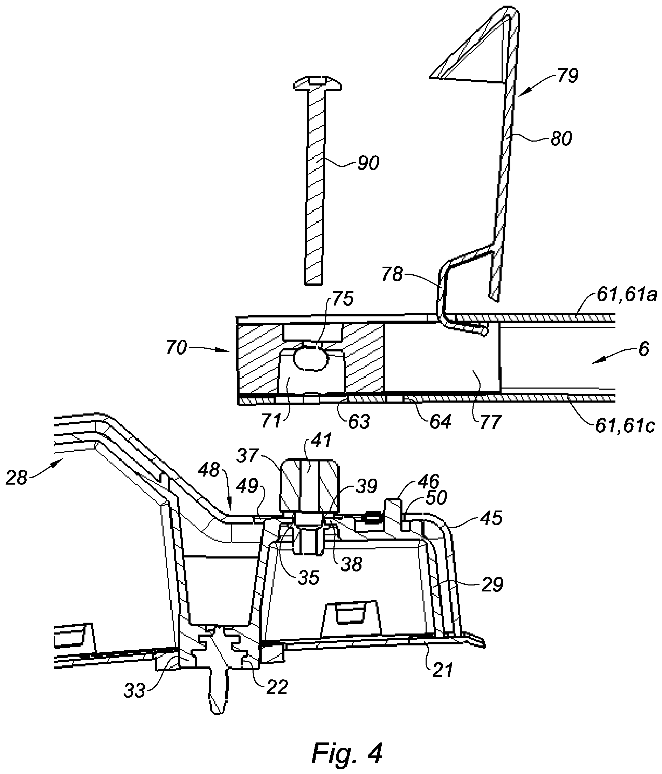

- La figure 4 est une vue en coupe éclatée de la fixation d'une barre de toit en position longitudinale,
- La figure 5 est une vue en coupe de la fixation d'une barre de toit en position longitudinale, avant l'introduction de la vis,
- La figure 6 est une vue en coupe de la fixation d'une barre de toit en position longitudinale,
- La figure 7 est une vue en coupe de la fixation d'une barre de toit en position transversale, avant introduction de la vis,
- La figure 8 est une vue coupe de la fixation d'une barre de toit en position transversale,
- La figure 9 est une vue de dessus de l'insert avec le capot ouvert,
- La figure 10 est une vue en coupe d'un premier mode de réalisation de l'entretoise,
- La figure 11 est une vue en coupe d'un deuxième mode de réalisation de l'entretoise,

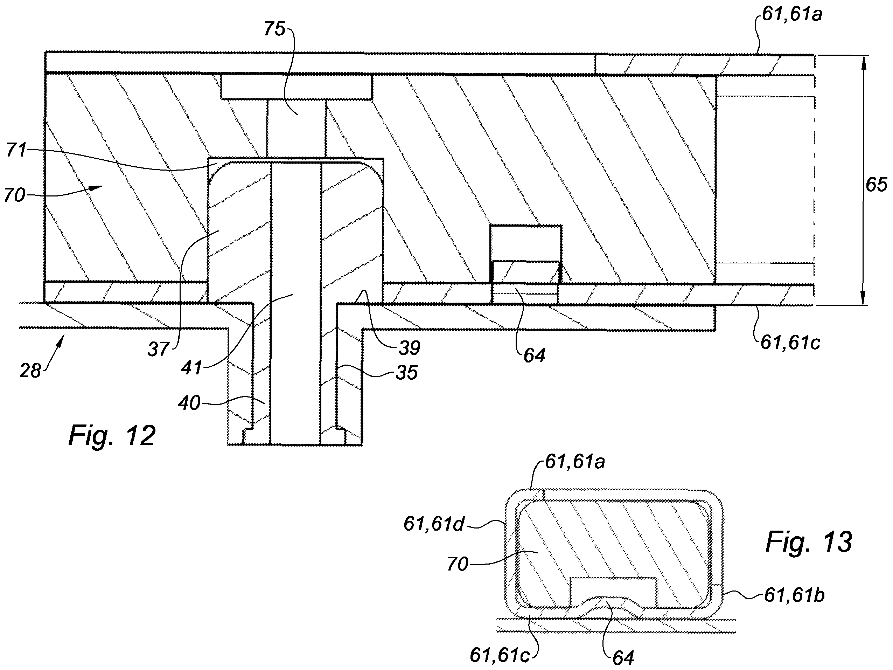

- La figure 12 est une vue en coupe partielle de coté d'un insert et d'une barre de toit selon l'invention,
- La figure 13 est une vue en coupe de face d'un insert et d'une barre de toit selon l'invention,
- La figure 14 est une vue en coupe d'un troisième mode de réalisation de l'entretoise dans une première position,
- La figure 15 est une vue en coupe d'un troisième mode de réalisation de l'entretoise dans une deuxième position.

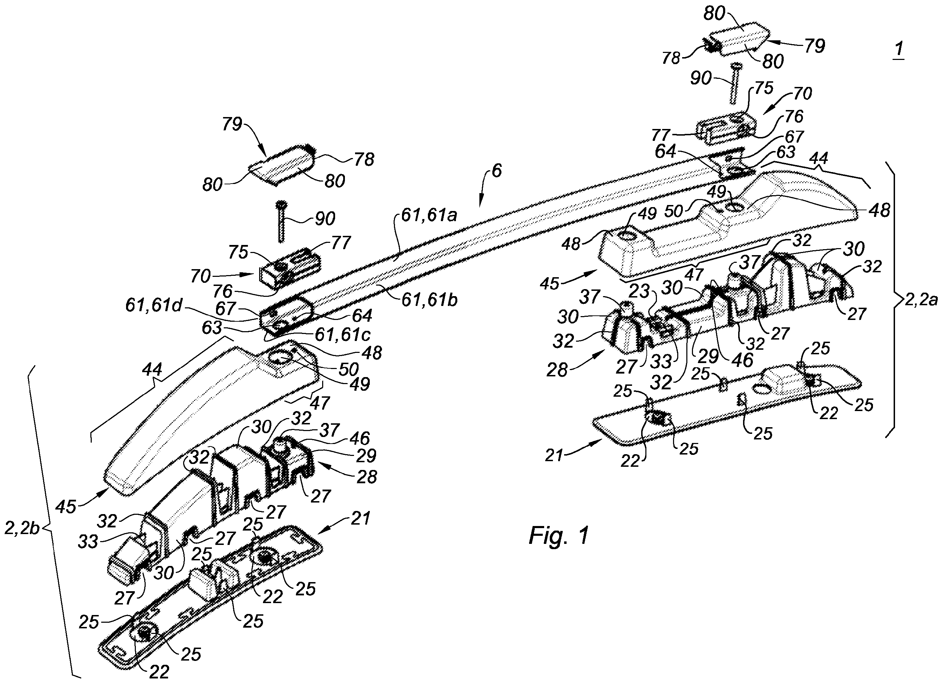

En référence à la figure 1, l'invention concerne un ensemble de barres de toit 1 comprenant notamment deux pieds 2 de fixation et une barre 6. Un premier pied 2a est destiné à être fixé sur le toit d'un véhicule, à l'arrière par rapport au sens d'avance du véhicule. Un deuxième pied 2b est destiné à être fixé sur le toit d'un véhicule, à l'avant par rapport au sens d'avance du véhicule.

Les pieds 2 comprennent une platine de fixation 21. Selon le mode de réalisation ici présenté, la platine de fixation 21 est une plaque sensiblement rectangulaire. La platine de fixation 21 présente deux ouvertures 22 adaptées pour recevoir des vis, des agrafes, ou des rivets permettant de fixer la platine de fixation 21 sur le toit d'un véhicule. En outre, la platine de fixation 21 présente plusieurs dents d'encliquetage 25. Selon le mode de réalisation ici présenté, la platine de fixation 21 comprend six dents d'encliquetage 25. Les dents d'encliquetage 25 sont adaptées pour être engagées dans des fentes d'encliquetage 27 d'une ossature 28 qui sera présentée ci-après. La platine de fixation 21 peut, par exemple, être réalisée en matériau polymère pouvant être injecté ou moulé.

Comme énoncé précédemment, chaque pied 2 comprend une ossature 28 adaptée pour être fixée sur la platine de fixation 21. L'ossature 28 est conçue pour assurer la tenue mécanique du pied 2. L'ossature 28 comprend une peau 29 présentant des structures de renfort telles que des bossages 30 et des nervures 32. En outre, l'ossature 28 présente des fentes d'encliquetage 27 et une ouverture de fixation 33. L'ouverture de fixation 33 est adaptée pour être alignée avec une ouverture 22 de la platine de fixation 21 pour recevoir une vis, une agrafe, ou un rivet permettant de solidariser l'ossature 28, la platine de fixation 21 et le toit du véhicule.

Selon le mode de réalisation ici présenté, l'ossature 28 du premier pied 2a comprend deux perçages 35 et l'ossature 28 du deuxième pied 2b comprend un seul perçage 35. La fonction des perçages 35 sera détaillée ultérieurement.

Des moyens d'entretoisage sont fixés à l'embouchure de chaque perçage 35. Selon les deux modes de réalisation ici présentés, les moyens d'entretoisage sont une entretoise 37.

Selon les deux modes de réalisation ici présentés, l'entretoise 37 est un cylindre creux en matériau polymère comprenant un conduit 41. L'entretoise 37 peut présenter une épaisseur de 15 millimètres à 30 millimètres et un diamètre de 15 millimètres à 25 millimètres. Le conduit 41 est adapté pour être dans la continuité du perçage 35 lorsque l'entretoise 37 est fixée à l'embouchure du perçage 35.

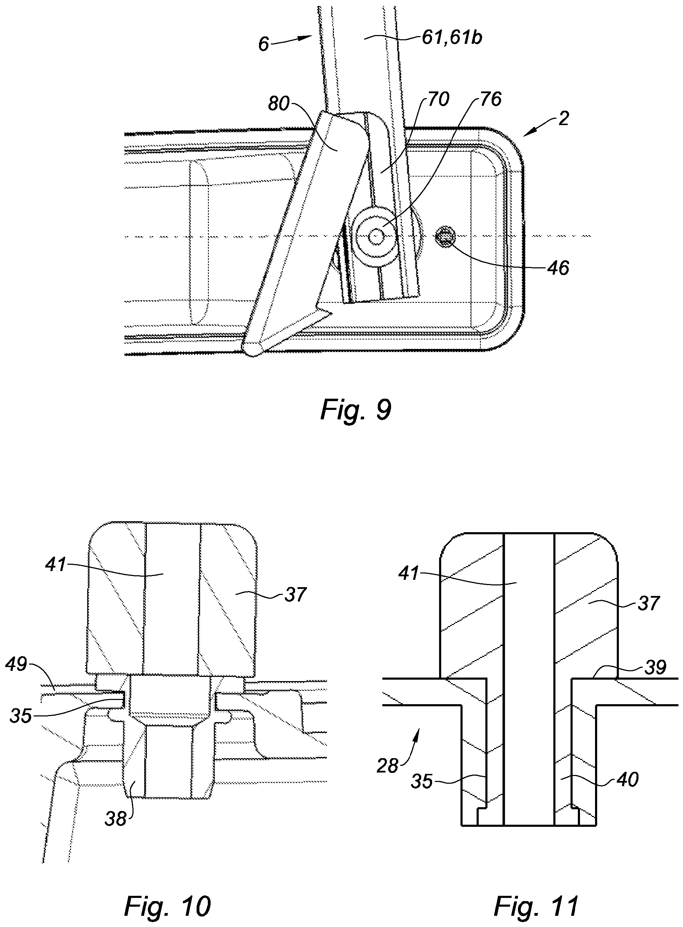

Selon le premier mode de réalisation de l'entretoise 37, présenté à la figure 10, l'entretoise 37 est soudée sur un écrou à sertir 38. L'écrou à sertir 38 est serti à l'embouchure du perçage 35.

Selon le deuxième mode de réalisation de l'entretoise 37, présenté à la figure 11, l'entretoise 37 présente un épaulement 39 et une portion de diamètre réduit 40 adaptée pour être positionnée dans l'embouchure du perçage 35. Selon le second mode de réalisation, l'entretoise 37 peut être réalisée par usinage puis frettée, ou peut être surmoulée, dans l'embouchure du perçage 35.

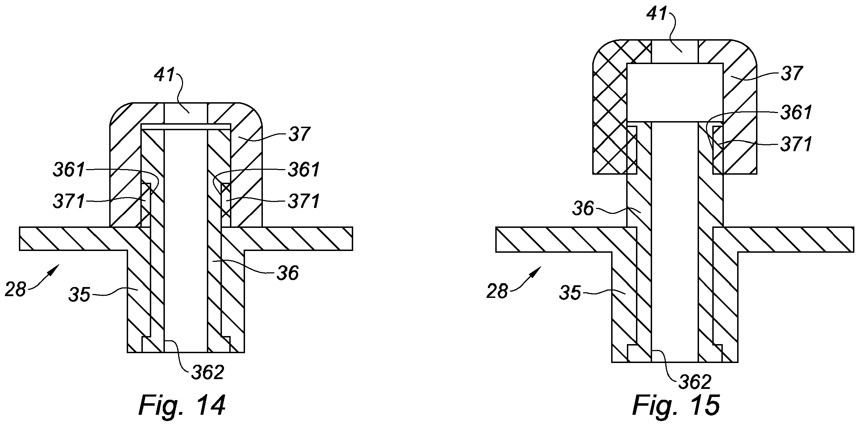

Selon un troisième mode de réalisation de l'entretoise 37, présenté aux figures 14 et 15, l'entretoise 37 présente un filet hélicoïdal 371 intérieur adapté pour coopérer avec un filet hélicoïdal 361 complémentaire d'un goujon 36 émergeant du perçage 35. Ce troisième mode de réalisation permet d'ajuster la position de l'entretoise 37 en vissant ou en dévissant l'entretoise 37 sur le goujon 36, entre une première position dans laquelle l'entretoise 37 est entièrement vissée (figure 14) et une deuxième position dans laquelle l'entretoise 37 est dévissée sur le goujon 36 (figure 15). Selon ce mode de réalisation, le conduit 41 peut, par exemple, présenter une section hexagonale adaptée pour coopérer avec un outil tel qu'une clé pour vis à six pans creux. Cette disposition technique peut permettre de visser ou dévisser l'entretoise 37 sur le goujon 36. Le goujon 36 présente un perçage longitudinal 362 adapté pour être dans la continuité du conduit 41. En outre, selon ce mode de réalisation, l'entretoise 37 peut présenter une butée (non représentée) à une extrémité du filet hélicoïdal 371, permettant de maintenir la liaison entre l'entretoise 37 et le goujon 36. En d'autres termes, la butée à l'extrémité du filet hélicoïdal 371 permet d'interdire la séparation de l'entretoise 37 et du goujon 36, lorsque l'entretoise 37 est entièrement dévissée.

A proximité et dans l'alignement du perçage 35, selon un axe longitudinal de l'ossature 28, l'ossature 28 présente un doigt de détrompage 46. La fonction du doigt de détrompage 46 sera présentée ultérieurement.

Chaque pied 2 comprend en outre une peau d'aspect 45. La peau d'aspect 45 peut être réalisée en matériau polymère dont la couleur et l'aspect de surface peuvent être adaptés au véhicule sur lequel le pied 2 doit être fixé. Selon le mode de réalisation ici présenté, la peau d'aspect 45 présente une première portion 44 en demi-ellipse. Cette première portion 44 est adaptée pour favoriser l'aérodynamisme et l'esthétique en termes de style du pied 2. Une deuxième portion 47 de la peau d'aspect 45 présente au moins une surface plane 48 présentant une ouverture 49 adaptée pour être traversée par une entretoise 37 et un trou 50 adapté pour être traversé par un doigt de détrompage 46. Il est à noter que la deuxième portion 47 comprend autant de surfaces planes 48, d'ouvertures 49 et de trous 50 qu'il y a d'entretoises 37 et de doigts de détrompage 46 sur l'ossature 28.

L'ensemble de barre de toit 1 comprend aussi une barre 6. Selon le mode de réalisation ici présenté, la barre 6 est un profilé de section transversale rectangulaire définissant quatre faces 61 avec une longueur 62 entre deux faces latérales 61b et 61d et une largeur 65 entre une face supérieure 61a et une face inférieure 61c. La longueur 62 présente une cote supérieure à la cote de la largeur 65. La barre 6 peut, par exemple, être réalisée en aluminium extrudé. La barre 6 présente deux extrémités. Selon le mode de réalisation ici présenté, chaque extrémité de la barre 6 présente une découpe raccourcissant la face supérieure 61a et une première face latérale 61b consécutives par rapport à la face inférieure 61c et une deuxième face latérale 61d.

Selon d'autres modes de réalisation la barre 6 pourrait ne pas présenter de découpe.

La face inférieure 61c présente une ouverture 63 de diamètre supérieur au diamètre de l'entretoise 37. L'ouverture 63 est adaptée pour être traversée par l'entretoise 37. A proximité de l'ouverture 63, dans l'alignement de l'ouverture 63 par rapport à un axe longitudinal de la barre 6, la barre 6 présente une empreinte 64 creuse, adaptée pour recevoir le doigt de détrompage 46. La deuxième face latérale 61d présente un perçage 67 ayant un diamètre inférieur au diamètre de l'entretoise 37. Il est à noter que les axes du perçage 67 et de l'ouverture 63 sont sécants et sensiblement perpendiculaires.

Un insert 70 est positionné dans chaque découpe de la barre 6. Selon le mode de réalisation ici présenté, l'insert 70 présente une géométrie sensiblement parallélépipédique. L'insert 70 présente un alésage 71 destiné à être positionné en regard de l'ouverture 63 pour recevoir une entretoise 37. L'alésage 71 présente une profondeur 73 environ équivalente à l'épaisseur de l'entretoise 37.

Un premier perçage 75 débouche dans l'alésage 71. Le premier perçage 75 est adapté pour recevoir une vis 90 permettant de fixer l'insert 70 et la barre 6 à un pied 2. Selon le mode de réalisation ici présenté, le premier perçage 75 présente un lamage permettant de noyer la tête de la vis 90. L'alésage 71 et le premier perçage 75 sont sensiblement perpendiculaires à la face supérieure 61a et à la face inférieure 61d de la barre 6.

L'insert 70 présente aussi un deuxième perçage 76, perpendiculaire au premier perçage 75. Le deuxième perçage 76 est traversant et débouche dans le perçage 67 de la face latérale 61d. Le deuxième perçage 76 est adapté pour recevoir une vis 90 et présente un diamètre inférieur au diamètre de l'entretoise 37. Le deuxième perçage peut présenter un lamage permettant de noyer la tête de la vis 90. Le deuxième perçage 76 est sensiblement perpendiculaire à la première face latérale 61b et à la deuxième face latérale 61d.

En outre, l'insert 70 présente une saignée 77 adaptée pour recevoir un col de cygne 78 d'un capot 79. Le capot 79 présente deux faces 80 perpendiculaires et une extrémité en biseau. Les deux faces 80 perpendiculaires du capot 79 sont adaptées pour masquer l'insert 70 positionné dans la découpe à une extrémité de la barre 6. Le col de cygne 78 permet au capot 79 de pivoter entre une position ouverte dans laquelle l'insert 70 est visible et accessible et une position fermée dans laquelle l'insert 70 est masqué.

En conditions d'utilisation, deux ensembles de barre de toit 1 sont fixés au toit d'un véhicule. L'assemblage des barres 6 aux pieds 2 par vis 90 autorise la rotation des barres 6 entre une position longitudinale dans laquelle chaque barre 6 est sensiblement parallèle à un axe longitudinal du véhicule et une position transversale dans laquelle chaque barre 6 est sensiblement perpendiculaire à un axe longitudinal du véhicule.

En position longitudinale, chaque barre 6 est fixée à un premier pied 2a et à un deuxième pied 2b.

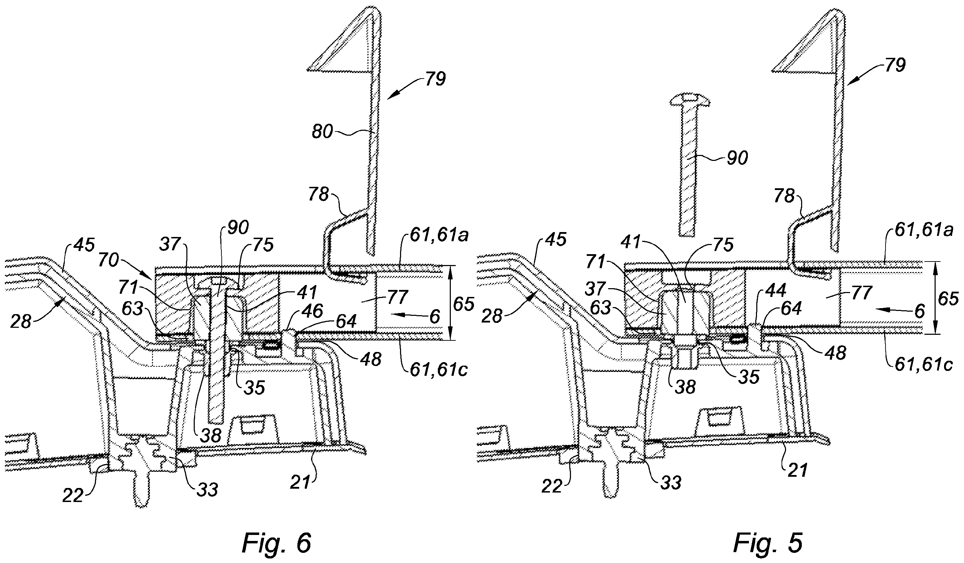

En référence aux figures 5 et 6, en position longitudinale, les barres 6 sont fixées aux pieds 2 de sorte que l'entretoise 37 est positionnée dans l'alésage 71 et le doigt de détrompage 46 est positionné dans l'empreinte 64. La vis de fixation 90 traverse le premier perçage 75, l'entretoise 37 et le perçage 35 du pied 2 pour fixer la barre 6 au pied 2.

En position transversale, chaque barre 6 est fixée soit à deux premiers pieds 2a, soit à deux deuxièmes pieds 2b.

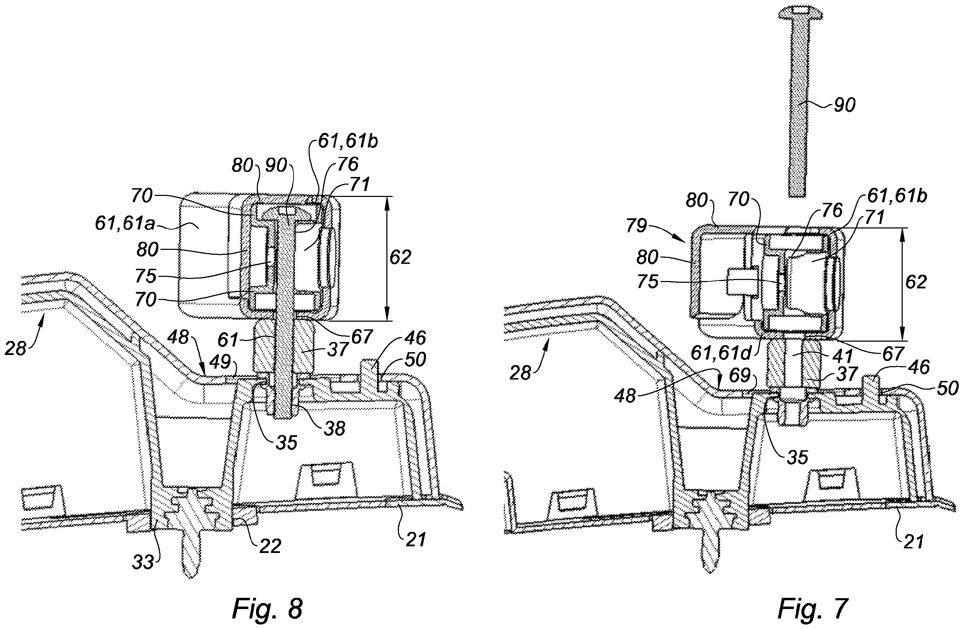

Comme représenté sur les figures 7 et 8, en position transversale, la barre 6 est positionnée de sorte que la deuxième face latérale 61d de la barre 6 repose sur l'entretoise 37. Pour assembler la barre 6 au pied 2, la vis 90 traverse le deuxième perçage 76 de l'insert 70, l'entretoise 37 et le perçage 35. Ainsi, en position transversale, la barre 6 est rehaussée par l'entretoise 37. En d'autres termes, en position transversale, la distance entre la barre 6 et la platine de fixation 21 du pied 2 est supérieure à la distance entre la barre 6 en position longitudinale et la platine de fixation 21 du pied 2 de la valeur de l'épaisseur de l'entretoise 37. En outre, la section rectangulaire de la barre 6 permet d'augmenter la distance d'un accessoire fixé sur la barre 6, par rapport au toit, de la valeur de l'épaisseur de l'entretoise 37 additionnée de la différence entre la longueur 62 et la largeur 65 de la barre 6.

De plus, selon le troisième mode de réalisation de l'entretoise, il est possible d'ajuster la distance entre la barre 6 en position longitudinale et la platine de fixation 21 du pied 2, en vissant ou en dévissant l'entretoise 37 sur le goujon 36.

Ainsi, l'invention fournit un ensemble de barre de toit 1 qui peut pivoter tout en permettant de faire varier la distance entre le toit et la barre de toit 1, en utilisant un mécanisme simple, léger et robuste.

La présence de deux perçages 35 et deux entretoises 37 sur les premiers pieds 2a permet de faire varier la distance entre deux barres 6 en position transversale, en déplaçant transversalement la barre 6 fixée aux premiers pieds 2a.

## Revendications

1. Ensemble de barre de toit (1) comprenant une barre et plusieurs pieds (2) de fixation de la barre (6) au toit d'un véhicule, la barre (6) pouvant être fixée dans une position longitudinale dans laquelle la barre (6) est parallèle à un axe longitudinal du véhicule ou dans une position transversale dans laquelle la barre (6) est perpendiculaire à l'axe longitudinal du véhicule, l'ensemble de barre de toit (1) comprenant des moyens d'entretoisage positionnés entre chaque pied (2) et la barre (6) configurés pour qu'en position transversale, la distance entre une platine de fixation (21) du pied (2) destinée à être fixée au toit et la barre (6) soit supérieure à la distance entre la platine de fixation du pied (2) et la barre (6) en position longitudinale, **caractérisé en ce que** les moyens d'entretoisage comprennent une entretoise (37) positionnée sur le pied (2) et un insert (70) lié à la barre (6), l'insert (70) présentant un alésage (71) adapté pour recevoir l'entretoise (37) lorsque la barre (6) est en position longitudinale, un premier perçage (75) débouchant dans l'alésage (71) pour recevoir une vis (90) pour fixer la barre (6) en position longitudinale et un deuxième perçage (76) débouchant dont le diamètre est inférieur à celui de l'entretoise (37) pour recevoir une vis (90) pour fixer la barre (6) en position transversale.

2. Ensemble de barre de toit (1) selon la revendication 1, **caractérisé en ce que** l'entretoise (37) présente un filet hélicoïdal (371) adapté pour coopérer avec un filet hélicoïdal (361) complémentaire du pied (2) pour permettre d'ajuster la distance entre la platine de fixation du pied (2) et la barre (6) en position transversale.

3. Ensemble de barre de toit (1) selon l'une des revendications 1 ou 2, **caractérisé en ce que** le premier perçage (75) débouchant est perpendiculaire au second perçage (76) débouchant.

4. Ensemble de barre de toit (1) selon l'une des revendications 1 à 3, **caractérisé en ce que** le pied (2) présente un doigt de détrompage (46) adapté pour être engagé dans une empreinte (64) de la barre (6) lorsque la barre (6) est en position longitudinale

5. Ensemble de barre de toit (1) selon l'une des revendications 1 à 4, **caractérisé en ce que** la barre (6) est un profilé de section transversale rectangulaire.

6. Ensemble de barre de toit (1) selon l'une des revendications 1 à 5 **caractérisé en ce que** la barre (6) présente deux extrémités, un insert (70) étant positionné à chaque extrémité.

7. Ensemble de barre de toit (1) selon l'une des revendications 1 à 6, **caractérisé en ce que** l'insert (70) présente une forme parallélépipédique.

8. Ensemble de barre de toit (1) selon l'une des revendications 1 à 7, **caractérisé en ce que** l'insert (70) comprend un capot (79) pivotant adapté pour recouvrir au moins partiellement l'insert (70).

9. Ensemble de barre de toit (1) selon la revendication 8, **caractérisé en ce que** l'insert (70) présente une saignée (77) adaptée pour recevoir un col de cygne (78) du capot (79) permettant au capot (79) de pivoter par rapport à l'insert (70).

10. Ensemble de barre de toit (1) selon l'une des revendications 8 ou 9, **caractérisé en ce que** le capot (70) présente deux faces (80) perpendiculaires.

## Patentansprüche

1. Dachrelingeinheit (1), umfassend eine Stange und mehrere Füße (2) zur Befestigung der Stange (6) auf dem Dach eines Fahrzeugs, wobei die Stange (6) in einer Längsposition befestigt werden kann, in der die Stange (6) parallel zu einer Längsachse des Fahrzeugs verläuft, oder in einer Querposition, in der die Stange (6) senkrecht zur Längsachse des Fahrzeugs verläuft, wobei die Dachrelingeinheit (1) Abstandhaltermittel umfasst, die zwischen jedem Fuß (2) und der Stange (6) positioniert und so ausgestaltet sind, dass in Querposition der Abstand zwischen einer Befestigungsplatte (21) des Fußes (2), die dazu bestimmt ist, auf dem Dach befestigt zu werden, und der Stange (6) größer ist als der Abstand zwischen der Befestigungsplatte des Fußes (2) und der Stange (6) in Längsposition, **dadurch gekennzeichnet, dass** die Abstandhaltermittel einen Abstandhalter (37), der auf dem Fuß (2) positioniert ist, und einen Einsatz (70) umfassen, der mit der Stange (6) verbunden ist, wobei der Einsatz (70) eine Aufbohrung (71) aufweist, die angepasst ist, um den Abstandhalter (37) aufzunehmen, wenn sich die Stange (6) in Längsposition befindet, wobei eine erste Rundbohrung (75) in die Aufbohrung (71) einmündet, um eine Schraube (90) zum Befestigen der Stange (6) in Längsposition aufzunehmen, und eine zweite Rundbohrung (76) einmündet, deren Durchmesser kleiner ist als jener des Abstandhalters (37), um eine Schraube (90) zum Befestigen der Stange (6) in Querposition aufzunehmen.

2. Dachrelingeinheit (1) nach Anspruch 1, **dadurch gekennzeichnet, dass** der Abstandhalter (37) ein Wendelgewinde (371) aufweist, das angepasst ist, um mit einem komplementären Wendelgewinde (361) des Fußes (2) zusammenzuwirken, um eine Einstellung des Abstands zwischen der Befestigungsplatte des Fußes (2) und der Stange (6) in Querposition zu ermöglichen.

3. Dachrelingeinheit (1) nach einem der Ansprüche 1 oder 2, **dadurch gekennzeichnet, dass** die erste Rundbohrung (75), die einmündet, senkrecht zu der zweiten Rundbohrung (76), die einmündet, verläuft.

4. Dachrelingeinheit (1) nach einem der Ansprüche 1 bis 3, **dadurch gekennzeichnet, dass** der Fuß (2) einen Unverwechselsbarkeits-Finger (46) aufweist, der angepasst ist, um in eine Vertiefung (64) der Stange (6) eingepasst zu werden, wenn sich die Stange (6) in Längsposition befindet.

5. Dachrelingeinheit (1) nach einem der Ansprüche 1 bis 4, **dadurch gekennzeichnet, dass** die Stange (6) ein Profil mit rechteckigem Querschnitt ist.

6. Dachrelingeinheit (1) nach einem der Ansprüche 1 bis 5, **dadurch gekennzeichnet, dass** die Stange (6) zwei Enden aufweist, wobei ein Einsatz (70) an jedem Ende positioniert ist.

7. Dachrelingeinheit (1) nach einem der Ansprüche 1 bis 6, **dadurch gekennzeichnet, dass** der Einsatz (70) eine Quaderform aufweist.

8. Dachrelingeinheit (1) nach einem der Ansprüche 1 bis 7, **dadurch gekennzeichnet, dass** der Einsatz (70) eine schwenkbare Abdeckung (79) umfasst, die angepasst ist, um mindestens teilweise den Einsatz (70) abzudecken.

9. Dachrelingeinheit (1) nach Anspruch 8, **dadurch gekennzeichnet, dass** der Einsatz (70) einen Schlitz (77) aufweist, der angepasst ist, um einen Schwanenhals (78) der Abdeckung (79) aufzunehmen, wodurch der Abdeckung (79) ermöglicht wird, in Bezug auf den Einsatz (70) zu schwenken.

10. Dachrelingeinheit (1) nach einem der Ansprüche 8 oder 9, **dadurch gekennzeichnet, dass** die Abdeckung (70) zwei senkrechte Seiten (80) aufweist.

## Claims

1. A roof bar assembly (1) comprising a bar and several feet (2) for fastening the bar (6) to the roof of a vehicle, the bar (6) capable of being fastened in a longitudinal position in which the bar (6) is parallel to a longitudinal axis of the vehicle or in a transverse position in which the bar (6) is perpendicular to the longitudinal axis of the vehicle, the roof bar assembly (1) comprising bracing means positioned between each foot (2) and the bar (6) which are configured so that in the transverse position, the distance between a fastening plate (21) of the foot (2) intended to be fastened to the roof and the bar (6) is greater than the distance between the fastening plate of the foot (2) and the bar (6) in the longitudinal position, **characterized in that** the bracing means comprise a spacer (37) positioned on the foot (2) and an insert (70) linked to the bar (6), the insert (70) having a bore (71) adapted to receive the spacer (37) when the bar (6) is in the longitudinal position, a first piercing (75) opening into the bore (71) to receive a screw (90) for fastening the bar (6) in the longitudinal position and a second through piercing (76) whose diameter is smaller than that of the spacer (37) to receive a screw (90) for fastening the bar (6) in the transverse position.

2. The roof bar assembly (1) according to claim 1, **characterized in that** the spacer (37) has a helical thread (371) adapted to cooperate with a helical thread (361) complementary to the foot (2) to allow adjusting the distance between the plate for fastening the foot (2) and the bar (6) in the transverse position.

3. The roof bar assembly (1) according to any of claims 1 or 2, **characterized in that** the first through piercing (75) is perpendicular to the second through piercing (76).

4. The roof bar assembly (1) according to any of claims 1 to 3, **characterized in that** the foot (2) has a foolproofing finger (46) adapted to be engaged in a cavity (64) of the bar (6) when the bar (6) is in the longitudinal position.

5. The roof bar assembly (1) according to any of claims 1 to 4, **characterized in that** the bar (6) is a profile of a rectangular cross section.

6. The roof bar assembly (1) according to any of claims 1 to 5, **characterized in that** the bar (6) has two ends, an insert (70) being positioned at each end.

7. The roof bar assembly (1) according to any of claims 1 to 6, **characterized in that** the insert (70) has a parallelepiped shape.

8. The roof bar assembly (1) according to any of claims 1 to 7, **characterized in that** the insert (70) comprises a pivoting hood (79) adapted to at least partially cover the insert (70).

9. The roof bar assembly (1) according to claim 8, **characterized in that** the insert (70) has a recess (77) adapted to receive a gooseneck (78) of the hood (79) allowing the hood (79) to pivot relative to the insert (70).

10. The roof bar assembly (1) according to any of claims 8 or 9, **characterized in that** the hood (79) has two perpendicular faces (80).
